# EUROPÄISCHE PATENTSCHRIFT

(11) **EP 1 069 406 B1**
(45) Veröffentlichungstag und Bekanntmachung des Hinweises auf die Patenterteilung: **15.11.2006**
(21) Anmeldenummer: 00115343.6
(22) Anmeldetag: 14.07.2000
(51) Int. Cl.: G01C 21/36, G08G 1/0962, G08G 1/133

(54) **Verfahren zur grafischen Darstellung einer vorausliegenden Strasse**
Method for the graphical representation of a street ahead
Méthode pour la représentation graphique d'une rue à l'avance

(30) Priorität: 16.07.1999 DE 19933504
(43) Veröffentlichungstag der Anmeldung: 17.01.2001
(73) Patentinhaber: Bayerische Motoren Werke Aktiengesellschaft, 80809 München (DE)
(72) Erfinder: Haenel, Klaus-Steffen, 80638 München (DE)

(56) Entgegenhaltungen:
- EP-A- 0 762 361
- DE-A- 19 531 822
- DE-A- 19 609 488
- JP-A- 9 178 505
- US-A- 3 152 317
- US-A- 4 349 823
- US-A- 4 694 295
- PATENT ABSTRACTS OF JAPAN vol. 1999, no. 01, 29. Januar 1999 (1999-01-29) -& JP 10 269495 A (MITSUBISHI MOTORS CORP), 9. Oktober 1998 (1998-10-09)

## Beschreibung

Die Erfindung betrifft ein Verfahren zur grafischen Darstellung besonderer Eigenschaften einer vorausliegenden Straße in einem Fahrzeug, insbesondere bezogen auf einen Nahbereich.

Häufig ist eine direkte Sicht des Fahrers auf den vorausliegenden Straßenverlauf behindert. Beispiele hierfür sind Fahrten bei Dunkelheit, Nebel oder Schneetreiben oder auf Strecken mit Gefälle, in Steilgelände eingebettete Kurven oder in der Kolonne hinter Großfahrzeugen.

In diesen Situationen bestehen hohe Anforderungen an die Aufmerksamkeit und die Durchführung von Handlungen, einerseits zur Stabilisierung, andererseits zur Verfolgung der optimalen Trajektorie und der Durchführung von Manövern. Fehlende Sicht in Verbindung mit fehlender Ortskenntnis führt hier zu einer erheblichen Steigerung der Fahrerbelastung, zu erhöhtem Risiko und zu Unsicherheit in der Fahrzeugführung.

Zur Vermeidung der vorgenannten Probleme sind Verfahren zur Straßenvisualisierung mit einer Anzeigevorrichtung bekannt (z.B. JP-09178505). Bei einer Vorrichtung gemäß der DE 19738764 A wird ein vorausliegender zu durchfahrender Straßenverlauf aus einer Straßendatenbasis und aus Navigationsdaten berechnet und fortlaufend in einem Bildfeld auf einem Fahrerbildschirm dargestellt. Diese Darstellung zeigt die zu durchfahrende Bahn mit hervorgehobenen Eigenschaften und Einzelheiten, die für die Fahrzeugführung Bedeutung besitzen, wie beispielsweise Ansätze der Nebenstraßen bei Kreuzungen, Kennzeichnung starker Krümmungen und anderer gefährlicher Abschnitte, grafische Symbole für Hindernisse im Fahrraum und die eigene Fahrzeugposition.

Derartige Eigenschaften und Einzelheiten werden im folgenden als Details bezeichnet.

Der Fahrer kann diese Details mit kurzer Blickzuwendung zum Fahrerbildschirm erfassen und wird in Fahrsituatiuonen, in denen er einerseits seine Aufmerksamkeit in hohem Maße der realen Fahrszene widmen muß und wobei er andererseits auf eine derartige Information angewiesen ist, nicht abgelenkt.

Die Straßendarstellung ist in verschiedenen Ausführungsvarianten möglich.

In einer ersten Ausführungsvariante wird der Straßenverlauf perspektivisch dargestellt (auch Aerial View, Bird View genannt).

In einer zweiten Ausführungsvariante erfolgt die Darstellung planimetrisch (auch Map View genannt), vergleichbar mit einer Wegverlaufs-Skizze.

In der oben genannten Offenlegungsschrift wird vorgeschlagen, wichtige Details der Straße, des Fahrraumes und die eigene Fahrzeugposition in direkter Zuordnung zum Straßenverlauf darzustellen.

Diese Art der Darstellung erleichtert zwar die Lokalisierung und Entfernungsabschätzung der Details, die notwendige annähernde Anpassung an den Maßstab der Straßendarstellung kann jedoch dazu führen, daß einige Details bei einer kurzen Blickzuwendung nicht erkannt werden, wenn sie zu klein dargestellt oder durch andere Darstellungselemente verschleiert sind.

Im Einzelnen betrachtet erleichtert die perspektivische Darstellung aufgrund der perspektivischen Verkürzung zwar die Erkennung von Krümmungen im Straßenverlauf, jedoch werden weiter entfernt liegende Details nachteilig verkleinert.

Bei der planimetrischen Darstellung besitzen alle Details ausreichende Größe, jedoch sind schwach gekrümmte Kurven, die an sich Stabilisierungshandlungen erfordern, bei kurzer Blickzuwendung nur schwierig zu erkennen.

DE 195 31822 beschreibt eine Darstellung der am besten zur Verfolgung einer Fahrtroute geeigneten Fahrbahn oder Fahrbahnseite.

Der Erfindung liegt die Aufgabe zugrunde, ein Verfahren der eingangs genannten Art zu schaffen, bei dem wichtige Details verdeutlicht und in ausreichender Größe dargestellt werden, so daß sie mit einer kurzen Blickzuwendung sicher erkannt werden können.

Die Erfindung löst diese Aufgabe mit den Merkmalen des Patentanspruchs 1.

Gemäß der Erfindung erfolgt die Darstellung der Details der Straße oder des Fahrraumes oder einer aus einem solchen Detail abgeleitete Information in Form von steuerbaren Diagrammen, die abhängig von den Positionen und/oder den Wirkungsrichtungen der Details auf der Straße oder im Fahrraum in bestimmten festen Positionen in der Anzeigevorrichtung stehen oder in bestimmten Richtungen in der Anzeigevorrichtung bewegt werden.

Dadurch werden Details der Straße sowie des Fahrraumes, die für die Fahrzeugführung Bedeutung besitzen mit einer Anzeigevorrichtung so dargestellt, daß sie für eine Erkennung mit kurzer Blickzuwendung eine hinreichende Größe besitzen, und daß sie nicht verschleiert oder verdeckt sind.
Die Darstellung in bestimmten festen Positionen ermöglicht dem Fahrer eine Lokalisierung der Details auf der Straße und im Fahrraum, eine Einschätzung ihrer Ausprägung und eine Erkennung der Wirkungsrichtung.

Die Diagramme werden dabei von Daten, die von Modulen einer Vorrichtung zu graphischen Darstellung eines Straßenbereichs, wie sie beispielsweise in der obengenannten Offenlegungsschrift beschrieben sind, vorzugsweise dem Navigationsrechner, dem Fahrzeugsensorsystem, dem Fahrzeugkommunikationssystem, den speziellen Datenbanken und dem Bahnanalysator bereitgestellt werden, gesteuert.

Die Darstellungspositionen der Details werden den entsprechenden Positionen im Fahrraum bzw. auf der Straße in der Weise zugeordnet, daß eine Information, die von einem Detail ausgeht, das sich in einer gewissen vorausliegenden Entfernung befindet oder in dieser Richtung wirkt, mit der Anzeigevorrichtung in einem oberen Bereich dargestellt wird, und daß eine Information, die nahe beim Fahrzeug entsteht, mit der Anzeigevorrichtung in einem unteren Bereich dargestellt wird, und daß die Information aus rechts- bzw. linksliegenden oder nach rechts bzw. links wirkenden Details entsprechend rechts bzw. links liegend oder in Form einer Bewegung nach rechts oder links mit der Anzeigevorrichtung dargestellt wird.

Diese Darstellungsweise gewährleistet eine Lokalisierung der zugrundeliegenden Details durch den Fahrer, indem die Attribute Fern, Nah, Rechts, Links in sinnvoller Weise der Darstellung oben, unten, rechts, links zugeordnet sind.

Die Diagramme sind vorzugsweise als Balkendiagramme ausgeführt, wobei die Balken in der Länge und/oder in der Helligkeit und/oder in der Farbe und/oder mit weiteren grafischen Ausdrucksmitteln verändert werden. Dabei entspricht eine große Länge oder eine große Helligkeit oder eine Signalfarbe einer starken Ausprägung oder einer großen Bedeutung für die Fahrzeugführung.

Eine weitere vorzugsweise Ausführung besteht aus beweglichen Marken und Strukturen, die insbesondere rechts- oder linksliegende bzw. nach rechts oder links wirkende Details repräsentieren.

Die Diagramme sind vorzugsweise gerade. Eine gekrümmte Ausführung kann bei Repräsentation bestimmte Details vorteilhaft sein.

Das Diagramm kann auch eine oder mehrere Marken in bestimmten festen Positionen enthalten, deren Position, Helligkeit, Farbe, Füllmuster zusätzliche Information über Details der Straße und/oder des Fahrraums enthält.

In einer vorteilhaften Ausführungsform der Erfindung befinden sich die Diagramme und Marken auf dem Fahrerbildschirm in bestimmten Feldern, die einen Rahmen bilden, wobei der Rahmen vorzugsweise die Straßenvisualisierung umschließt.

In einer weiteren vorteilhaften Ausführungsform der Erfindung befinden sich die Diagramme und Marken entsprechend ihrer Zuordnung zu einem gewissen vorausliegenden bzw. nahe am Fahrzeug liegenden, oder rechts- bzw. linksliegenden Bereich als separate Anzeigen oben bzw. unten oder rechts bzw. links im zentralen Bereich des Instrumentenbretts vor dem Fahrer, wobei nicht notwendigerweise eine Straßenvisualisierung vorgesehen ist.

In einer weiteren Ausführungsform befinden sich die Diagramme und Marken in einer oder mehreren Anzeigevorrichtungen, die besonders zur Darstellung von Balkendiagrammen geeignet sind, und die nicht notwendigerweise mit einem Fahrerbildschirm verbunden sind.
Die Anzeigevorrichtung ist vorzugsweise im Instrumentenbrett vor dem Fahrer und/oder im oberen Bereich des Instrumentenbretts rechts und/oder links angeordnet, denn diese Bereiche sind besonders für eine Beobachtung durch den Fahrer geeignet.

In einer anderen Ausführungsart befindet sich die Anzeigevorrichtung in einem kollimierten Strahlengang im Instrumentenbrett vor dem Fahrer und/oder im oberen Bereich des Instrumentenbretts rechts und/oder links.
Eine solche Anordnung ist beispielsweise in der DE 19906706.6 beschrieben.
Bei einem kollimierten Strahlengang erfolgt die Darstellung scheinbar in einer größeren Entfernung, so daß vorteilhaft die Akkomodation nicht verändert wird.

Insbesondere wird Information über geometrische Eigenschaften des vorausliegenden Straßenverlaufs, vorzugsweise die Stärke der Krümmung und die Krümmungsrichtung vorausliegender Kurven und Abbiegungen, über weitere Verkehrsteilnehmer und Hindernisse im Fahrraum auf der eigenen und benachbarten Fahrbahnen, über die Seitenposition des eigenen Fahrzeugs, bezogen auf die Gesamtheit der nebeneinanderliegende Fahrbahnen und über die Fahrzeugrichtung, bezogen auf die örtliche Richtung der Fahrbahnen, dargestellt.
Die Information über weitere Details, wie Straßenzustand, Gefällestrecken, Sichtweite, mögliche Ruhepunkte u.a. ist in gleicher Weise darstellbar, eine Beschränkung auf die Darstellung der für die Fahrzeugführung wichtigsten Information ist jedoch zu bevorzugen.

Der Vorteil der erfindungsgemäßen Darstellung von Details der Straße und des Fahrraumes besteht darin, daß die Darstellung nicht an die Visualisierung des Straßenverlaufs gebunden, sondern vielmehr in der Wahl des Darstellungsortes, der Darstellungsgröße und der Darstellung der Wirkungsrichtung frei ist.
Insbesondere besteht damit auch die Möglichkeit einer nichtlinearen Darstellung, beispielsweise zur Hervorhebung an sich nur schwach ausgeprägter Details.

Anhand eines in Zeichnungen dargestellten Ausführungsbeispiels ist die Erfindung weiter erläutert. Es zeigt
Fig. 1: eine Diagramm-Darstellung gemäß einem Beispiel in einem oberen Feld eines Rahmens, der das Bildfeld der Straßenvisualisierung umschließt,
Fig. 2: eine Darstellung von Marken in festen Positionen in einem oberen Feld des Rahmens,
Fig. 3: eine Diagramm-Darstellung in einem unteren Feld des Rahmens,
Fig. 4: eine getrennte Darstellung der Diagramme im zentralen Bereich des Instrumentenbretts vor dem Fahrer

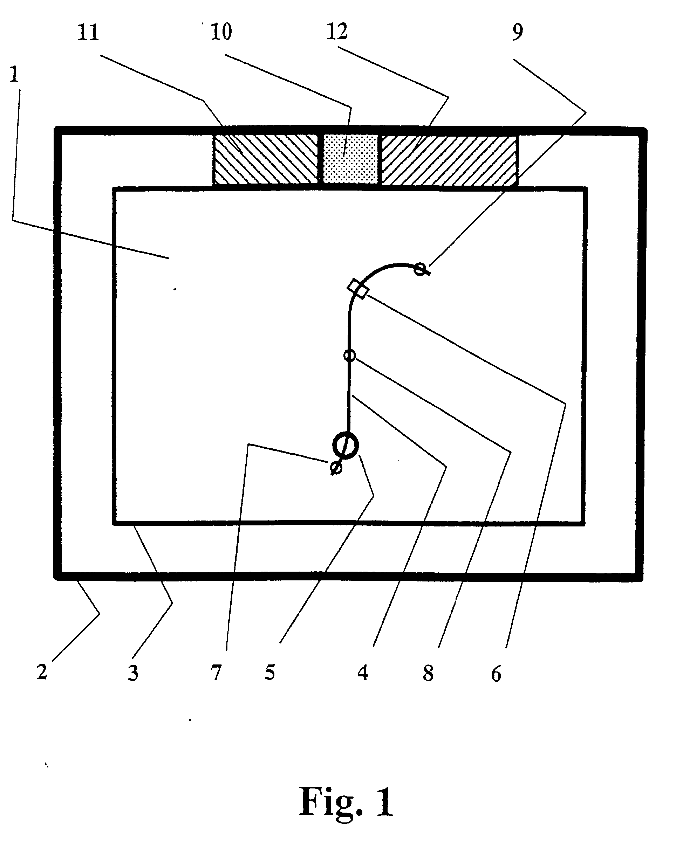

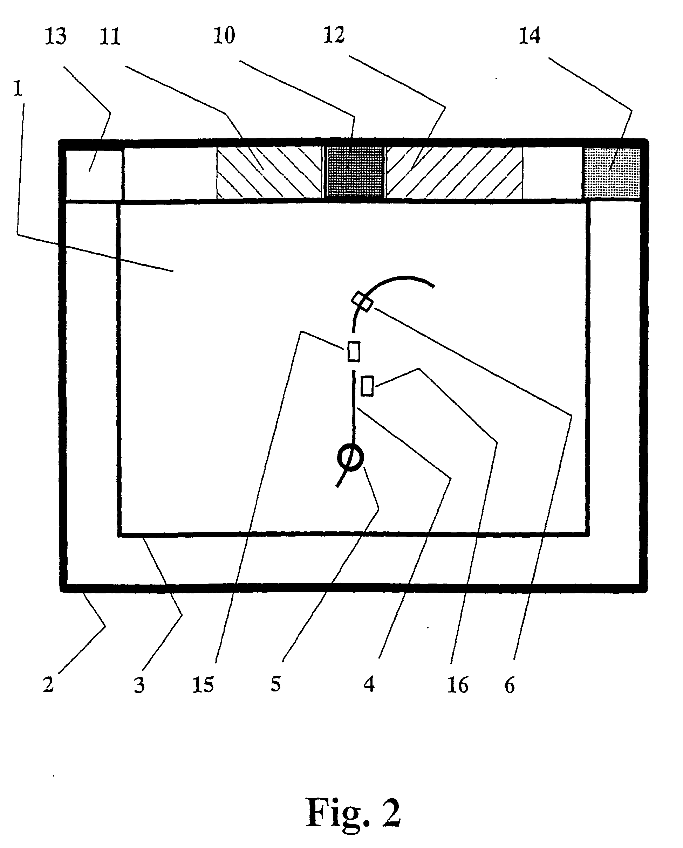

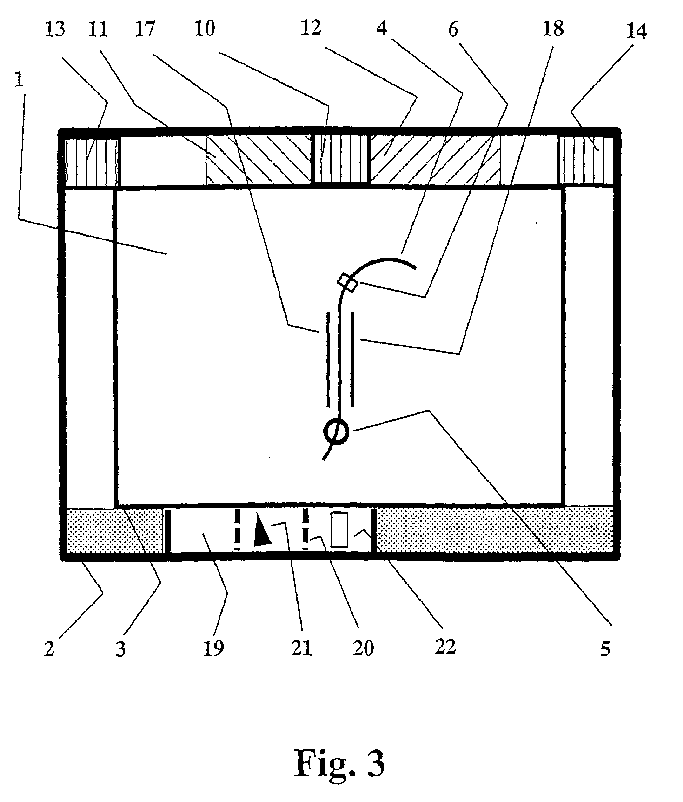

Wie in Fig. 1 gezeigt, werden die Diagramme in einem Rahmen des Bildfeldes der an sich bekannten Straßenvisualisierung 1 dargestellt. Dabei ist das gesamte Bildfeld durch die Umrandungslinie 2, und das Bildfeld der Straßenvisualisierung 1 durch die Umrandungslinie 3 gekennzeichnet. Dies gilt auch für die Fig. 2 und Fig. 3.

Das Bildfeld der Straßenvisualisierung 1 enthält dem technischen Stand entsprechend die Darstellung eines Straßenstücks 4, das dem eigenen Fahrzeug, dargestellt durch ein Symbol 5, vorausliegt. Es ist außerdem eine Distanzmarke 6, die sich in einer wählbaren konstanten Entfernung, beispielsweise 200m entsprechend, vor dem Fahrzeug 5 befindet, dargestellt.

Die Marken 7, 8, 9 grenzen beispielsweise zwei Strecken auf dem Straßenstück 4 ab, wobei die erste Strecke zum größten Teil vor dem Fahrzeug 5, die zweite Strecke zu gleichen Teilen vor und hinter der Distanzmarke 6 liegt.

Gemäß diesem Beispiel werden für die erste und die zweite Strecke jeweils der Mittelwert der Krümmung und die mittlere Krümmungsrichtung berechnet und in jeweils einem Diagrammbalken 11, 12 dargestellt.

Die mittlere Krümmung im Bereich des Fahrzeugs 5 und im Bereich unmittelbar davor ist nach links gerichtet, sie wird demzufolge in einem nach links gerichteten Diagrammbalken 11 dargestellt.

Entsprechend wird die nach rechts gerichtete mittlere Krümmung im Bereich der weiter voraus liegenden Distanzmarke 6 in einem nach rechts gerichteten Diagrammbalken 12 dargestellt.

Die Flächen der Diagrammbalken 11, 12 besitzen unterschiedliche Farbe, Struktur, Helligkeit zur eindeutigen Zuordnung zum Bereich um das Fahrzeug 5 und zum Bereich um die Distanzmarke 6.

Die Krümmung im Bereich des Fahrzeugs 5 und unmittelbar davor besitzt vorrangige Bedeutung für die Fahrzeugführung. Der zugeordnete Diagrammbalken 11 wird demzufolge mit einer dominanten Farbe, Struktur, Helligkeit dargestellt und überdeckt den Diagrammbalken 12, falls beide Diagrammbalken auf der gleichen Seite liegen.

Der Diagrammbalken 12 dient der Vorausinformation des Fahrers über die nächste zu erwartende Kurven-Krümmung.

In einer vorteilhaften Ausführungsvariante der Erfindung wird die Balkenlänge nichtlinear aus der mittleren Krümmung des zugeordneten Bereichs in der Weise berechnet, daß geringe Krümmungen, die im Feld der Straßenvisualisierung 1 beispielsweise unmittelbar vor dem Fahrzeug nicht deutlich erkennbar wären, in den Balkendiagrammen 11, 12 hervorgehoben werden.

Durch ein mittleres Trennfeld 10 wird die Erkennung der Balkenrichtungen rechts" und "links" unterstützt.

In Fig. 2 befinden sich Fahrzeuge oder Hindernisse im Fahrraum auf der vorausliegenden Fahrbahn, und das eigene Fahrzeug ist in an sich bekannter Weise mit einer Sensorvorrichtung zur Erkennung derartiger Hindernisse ausgestattet.
Nach dem Stand der Technik sind im Bildfeld der Straßenvisualisierung 1 beispielsweise ein vorausfahrendes Fahrzeug 15 auf der eigenen Fahrbahn 4 und ein stehendes Fahrzeug 16 auf der rechten benachbarten Fahrbahn schematisch dargestellt.

Gemäß diesem Beispiel wird die Tatsache, daß sich Fahrzeuge oder Hindernisse 15, 16 in einem bestimmten Bereich 6 vor dem eigenen Fahrzeug 5 befinden in drei Marken in festen Positionen 10, 13, 14 dargestellt, wobei diese Marken der eigenen Fahrbahn 4 und jeweils der linken und rechten benachbarten Fahrbahn zugeordnet sind.

Die Felder dieser Marken sind leer, wenn sich keine Fahrzeuge oder Hindernisse im vorausliegenden, beispielsweise im durch die Distanzmarke 6 begrenzten Bereich befinden. So ist im gewählten Beispiel die Marke 13 leer.
In einer vorzugsweisen Ausführung dieses Beispiels besitzen die Marken 10, 13, 14 konstante Größe. Sie erhalten eine Farbe, Struktur, Helligkeit je nach Bedeutung des darin angezeigten Fahrzeugs oder Hindernisses 15, 16 für die eigene Fahrzeugführung.

Fig. 3 zeigt in an sich bekannter Weise im innenliegenden Bildfeld der Straßenvisualisierung 1 drei nebeneinanderliegende Fahrbahnen 4, 17 und 18, wobei sich das Fahrzeug 5 auf der mittleren Fahrbahn 4 befindet.

Gemäß diesem Beispiel werden die momentane seitliche Position des Fahrzeugs 5 und die momentane Richtung der Fahrzeuglängsachse oder der Fahrt, relativ zur örtlichen Straßenrichtung 22 in einem Diagramm 19 dargestellt. Das Diagramm enthält auch ein Fahrzeugsymbol 21, mit dem eine Richtungsdarstellung erfolgt. Außerdem werden der Querschnitt der Gesamtheit der nebeneinanderliegenden Fahrbahnen und Leitlinien 20 dargestellt.

Zur Erleichterung der Einschätzung der momentanen seitlichen Position kann das Diagramm 19 eine in Straßenrichtung weisende Mittenmarke 22 in der Mitte des unteren Rahmenfeldes enthalten.

Gemäss den Erfindung wird die Mitte derjenigen Fahrbahn, die am besten zur Verfolgung der Fahrtroute geeignet ist, auf die Mitte 22 des unteren Rahmenfeldes zentriert, so daß der Fahrer die seitliche Abweichung von der geeigneten Fahrbahn erkennen und das Fahrzeug entsprechend führen kann.

Im Beispiel der Fig. 3 ist ein Fall dargestellt, in dem der Fahrer nicht auf der geeigneten Fahrbahn fährt und aufgrund seiner momentanen Richtung im Begriff ist, die äußere linke Fahrbahn einzunehmen.

Der Grund kann darin liegen, daß der Fahrer die realen Fahrbahnmarkierungen beispielsweise wegen einer Schneebedeckung nicht erkennen kann. Das Diagramm 19 vermittelt ihm die zur Korrektur seiner Fahrbahn- und Richtungswahl notwendige Information.

In einer vorteilhaften Ausführung der Erfindung wird die momentane Richtung der Fahrzeuglängsachse oder der Fahrt, relativ zur örtlichen Straßenrichtung 22 nichtlinear berechnet und dargestellt, so daß geringe Abweichungen der Richtung der Fahrzeuglängsachse oder der Fahrt von der örtlichen Straßenrichtung in der Darstellung 21 hervorgehoben werden.

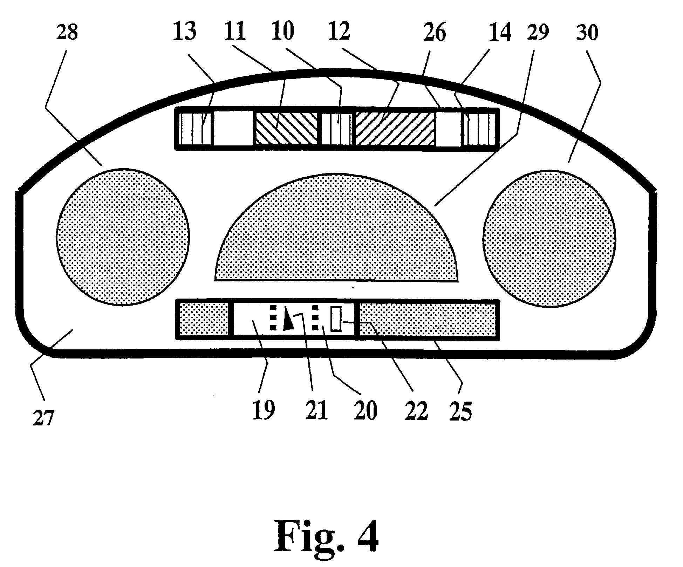

Fig. 4 zeigt die erfindungsgemäße Darstellung von Diagrammen im Bereich des Instrumentenbretts 27. Dabei ist das Diagramm 25 gemäß seiner Information über einen nahe am Fahrzeug liegenden Situation unten, das Diagramm 26 entsprechend der Darstellung einer in gewisser Entfernung liegenden Situation oben angeordnet.

Das Instrumentenbrett 27 enthält in an sich bekannter Weise weitere Anzeigeelemente, hier beispielsweise die Instrumente 28, 29 und 30, von denen das zentrale Instrument 29 die erfindungsgemäßen Diagramme 25 und 26 optisch trennt.
Beim hier gezeigten Beispiel werden nur Eigenschaften der Straße (in Diagramm 26) und der Fahrzeugposition auf der Straße (in Diagramm 25) repräsentiert, nicht jedoch der Straßenverlauf selbst.

Die Einzelheiten der Diagramme 10 bis 14 und 19 entsprechen den in Fig. 1, Fig. 2 und Fig. 3 dargestellten Anzeigen.

## Patentansprüche

1. Verfahren zur grafischen Darstellung besonderer Eigenschaften einer vorausliegenden Straße mit einer Anzeigevorrichtung in einem Fahrzeug,
**dadurch gekennzeichnet,**
**dass** die Darstellung von Details der Straße oder des Fahrraumes oder der aus einem solchen Detail abgeleiteten Information in Form von steuerbaren Diagrammen vorgenommen wird, deren Positionen in der Anzeigevorrichtung abhängig von den Positionen und/oder den Wirkungsrichtungen der Details auf der Straße oder im Fahrraum sind,
wobei die Mitte derjenigen Fahrbahn, welche am besten zur Verfolgung einer Fahrtroute geeignet ist, zentriert auf die Mitte eines unteren Rahmenfeldes dargestellt wird.

2. Verfahren nach Anspruch 1, **dadurch gekennzeichnet, daß** die Diagramme als Balkendiagramme mit graphischen Ausdrucksmitteln wie veränderliche Länge, Farbe, Helligkeit, Füll- und Umrandungsmuster des einzelnen Balkens dargestellt werden.

3. Verfahren nach Anspruch 1, **dadurch gekennzeichnet, daß** die Diagramme als bewegliche Marken oder bewegliche grafische Muster ausgebildet sind.

4. Verfahren nach Anspruch 1, **dadurch gekennzeichnet, daß** die Diagramme eine oder mehrere Marken in bestimmten festen Positionen enthalten, und wobei die Helligkeit und/oder die Farbe und/oder das Füllmuster eine Information über das Detail wiedergibt.

5. Verfahren nach Anspruch 1 bis 4, **dadurch gekennzeichnet, daß** sich die Diagramme und Marken auf einer als Fahrerbildschirm ausgebildeten Anzeigevorrichtung in bestimmten Feldern, die einen Rahmen um ein inneres Bildfeld bilden, befinden.

6. Verfahren nach Anspruch 1 bis 4, **dadurch gekennzeichnet, daß** sich die Diagramme und Marken in separaten, nicht notwendigerweise mit einem Fahrerbildschirm verbundenen Anzeigevorrichtungen befinden, wobei diese vorzugsweise im Instrumentenbrett vor dem Fahrer angeordnet sind.

7. Verfahren nach Anspruch 1 bis 4, **dadurch gekennzeichnet, daß** sich die Anzeigevorrichtung in einem Kollimator-Strahlengang im Instrumentenbrett oder rechts und/oder links oberhalb des Instrumentenbretts befindet.

8. Verfahren nach Anspruch 1 bis 7, **dadurch gekennzeichnet, daß** mittels der Diagramme und Marken insbesondere die Stärke der Krümmung und die Krümmungsrichtung vorausliegender Kurven und Abbiegungen, und/oder die Anwesenheit weiterer Verkehrsteilnehmer und Hindernisse im Fahrraum auf der eigenen und auf benachbarten Fahrbahnen, und/oder die Seitenposition des eigenen Fahrzeugs bezogen auf die Straße, und/oder die Richtung des eigenen Fahrzeugs, bezogen auf die örtliche Richtung der Straße dargestellt werden.

## Claims

1. A method of graphic representation of particular characteristics of a road ahead, using a display device in a vehicle,
**characterised in that** details of the street or road area or information derived from such details is displayed in the form of adjustable diagrams, the position of which in the display device is dependent on the positions and/or directions of actions of the detail on the street or in the road area,
wherein the middle of the lane best suited for following a route is shown centred on the middle of a bottom frame compartment.

2. A method according to claim 1, **characterised in that** the diagrams are bar charts with graphic accentuation means such as variations in the length, colour brightness, infill pattern and boundary pattern of the individual bars.

3. A method according to claim 1, **characterised in that** the diagrams are in the form of movable marks or movable graphic patterns.

4. A method according to claim 1, **characterised in that** the diagrams contain one or more marks in specific fixed positions, wherein the brightness and/or colour and/or infill pattern reproduces information about the detail.

5. A method according to claims 1 to 4, **characterised in that** the diagrams and marks on a display device in the form of a driver's monitor are in specific compartments forming a frame around an inner image area.

6. A method according to claims 1 to 4, **characterised in that** the diagrams and marks are in separate display devices, not necessarily connected to a driver's monitor, the devices preferably being disposed on the dashboard in front of the driver.

7. A method according to claims 1 to 4, **characterised in that** the display device is in a collimator path of rays on the dashboard or on the right and/or left above the dashboard.

8. A method according to claims 1 to 7, **characterised in that** the diagrams and marks more especially show the amount and direction of curvature of bends and turns ahead and/or the presence of other traffic or obstacles in the road area on the driver's and on neighbouring lanes, and/or the lateral position of the driver's vehicle relative to the road and/or the direction of the driver's vehicle relative to the local direction of the road.

## Revendications

1. Procédé de représentation graphique de particularités d'une rue ou l'avant au moyen d'un dispositif d'affichage dans un véhicule,
**caractérisé en ce que**
la représentation de détails de la rue ou de l'espace de roulement ou de l'information déduite d'un tel détail est réalisée sous forme de diagrammes pouvant être commandés dont les positions dans le dispositif d'affichage sont fonction des positions et/ou des directions d'action des détails sur la rue ou dans l'espace de roulement, le centre de la voie de circulation la mieux appropriée pour suivre un trajet étant représenté de façon centrée sur le centre d'un champ de cadre inférieur.

2. Procédé selon la revendication 1,
**caractérisé en ce que**
les diagrammes sont représentés sous forme de diagrammes à barres avec des moyens d'expression graphiques tels qu'une longueur, une couleur, une luminosité et des symboles de remplissage et d'entourage variables de chacune des barres.

3. Procédé selon la revendication 1,
**caractérisé en ce que**
les diagrammes présentent la forme de marques mobiles ou de symboles graphiques mobiles.

4. Procédé selon la revendication 1,
**caractérisé en ce que**
les diagrammes contiennent une ou plusieurs marques dans des positions fixes déterminées, et la luminosité et/ou la couleur et/ou le symbole de remplissage représente une information concernant le détail.

5. Procédé selon la revendication 1 à 4,
**caractérisé en ce que**
les diagrammes et marques se situent sur un dispositif d'affichage sous forme d'écran de conducteur dans des champs déterminés qui forment un cadre autour d'un champ d'image intérieur.

6. Procédé selon les revendications 1 à 4,
**caractérisé en ce que**
les diagrammes et marques se situent dans des dispositifs d'affichage séparés qui ne sont pas nécessairement reliés à un écran de conducteur et sont de préférence disposés dans le tableau de bord devant le conducteur.

7. Procédé selon les revendications 1 à 4,
**caractérisé en ce que**
le dispositif d'affichage se situe dans une trajectoire de faisceau collimaté dans le tableau de bord ou à droite et/ou à gauche au-dessus du tableau de bord.

8. Procédé selon les revendications 1 à 7,
**caractérisé en ce que**
les diagrammes et les marques représentent en particulier l'ampleur de la courbure et la direction de la courbure de virages et de tournants situés en avant et/ou la présence d'autres usagers de la rue et d'obstacles dans l'espace de roulement sur la voie utilisée et des voies de circulation voisines et/ou la position latérale du véhicule par rapport à la rue et/ou la direction du véhicule par rapport à la direction locale de la rue.
